# FASCICULE DE BREVET EUROPEEN

(11) **EP 3 313 735 B1**
(45) Date de publication et mention de la délivrance du brevet: **14.11.2018**
(21) Numéro de dépôt: 16781509.1
(22) Date de dépôt: 19.09.2016
(51) Int. Cl.: B64G 1/22, B64G 1/64, F42B 15/36

(54) **DISPOSITIF DE SÉPARATION CONTRÔLÉE ENTRE DEUX PIÈCES ET APPLICATION D'UN TEL DISPOSITIF**
VORRICHTUNG ZUR GESTEUERTEN TRENNUNG ZWISCHEN ZWEI TEILEN UND VERWENDUNG SOLCH EINER VORRICHTUNG
DEVICE FOR CONTROLLED SEPARATION BETWEEN TWO PARTS AND USE OF SUCH A DEVICE

(30) Priorité: 30.09.2015 FR 1559241
(43) Date de publication de la demande: 02.05.2018
(73) Titulaire: Airbus Defence and Space SAS, 31402 Toulouse Cedex 4 (FR)
(72) Inventeur: OLDHAM, Robert, 31402 Toulouse (FR); MAYO, Philippe, 31402 Toulouse (FR); LEVALLOIS, Franck, 31402 Toulouse (FR); FIGUS, Christophe, 31402 Toulouse (FR); LOGUT, Daniel, 31402 Toulouse (FR)
(74) Mandataire: Cabinet Plasseraud
(86) Numéro de dépôt international: PCT/FR2016/052369
(87) Numéro de publication internationale: WO 2017/055706

(56) Documents cités:
- WO-A1-2015/014942
- JP-A- 2009 166 678
- US-B1- 6 299 105

## Description

L'invention concerne un dispositif de séparation de deux pièces, qui trouvera une application particulière, mais non exclusivement, dans le domaine des véhicules spatiaux. Notamment, cette invention s'applique aux satellites comprenant des appendices ou équipements tels que des panneaux solaires ou des radiateurs destinés à être déployés d'une position stockée, pour le lancement par exemple, à une position d'opération ou débloquée lorsque le satellite est en orbite, c'est-à-dire d'un état fixe à un état libre. L'invention s'applique également à des équipements animés d'un satellite, c'est-à-dire des équipements destinés à être en mouvement lorsque le satellite est en orbite, et qui doivent être bloqués par exemple pendant le lancement.

Selon une mise en oeuvre particulière, l'invention propose un système de dégerbage et/ou de déblocage d'un appendice ou équipement d'un satellite qui ne contient aucun mécanisme, qui soit fiable, qui soit peu encombrant, qui ne génère pas de chocs importants et qui ne coûte pas cher à fabriquer.

Il existe déjà des mécanismes de dégerbage et/ou de déblocage utilisant par exemple des systèmes pyrotechniques, c'est-à-dire impliquant la combustion en vue de la destruction d'une pièce de liaison, ou des systèmes mécaniques complexes ou encore des systèmes se basant sur la séparation par chauffage des pièces à séparer.

Les systèmes pyrotechniques génèrent de nombreux problèmes. En particulier, lors de la combustion, des chocs et vibrations peuvent se produire, risquant d'endommager les équipements du satellite notamment les équipements de mesure de précision. En outre, les systèmes pyrotechniques entraînent en général des débris qui seront largués dans l'espace, ce qui n'est pas souhaitable notamment dans le cas où des instruments sensibles, par exemple d'optique ou de charge utile de télécommunications, sont montés sur le satellite et risquent d'être endommagés ou contaminés par les débris. Enfin, les systèmes pyrotechniques impliquent la mise en place de câblage onéreux.

Le document US 6,299,105 donne un exemple de dispositif de séparation pour le dégerbage d'une structure déployable d'un satellite. La structure déployable est montée sur un panneau en matière composite par l'intermédiaire d'un socle métallique. Une fois largué, le satellite est soumis par son environnement à plusieurs cycles thermiques, impliquant une succession de montée et de baisse de température. Le socle métallique est conçu pour se rompre par fatigue après un nombre prédéterminé de cycles thermiques sous l'effet de déformations.

Cette solution présente plusieurs inconvénients. Notamment, la fatigue du socle métallique n'est pas contrôlée, mais est dépendante des conditions de l'environnement du satellite. Par conséquent, le moment de la séparation de la structure déployable n'est pas déterminé avec précision. En outre, la fiabilité des éléments du dispositif doit être élevée pour éviter que la séparation ait lieu à un moment inopportun, ce qui augmente les coûts de fabrication du dispositif. Dans cette solution, le satellite doit être placé en orbite terrestre basse (LEO) pour que les cycles thermiques de l'environnement soient suffisants pour obtenir la séparation en quelques heures. Cette solution est inadaptée au cas d'une orbite géostationnaire (GEO), car les différences de température sont telles que la séparation mettrait plusieurs jours à se faire.

Le document JP 2009-066678 propose une autre solution, dans laquelle une vis assure la liaison entre deux éléments. La vis est insérée dans des perçages taraudés et coaxiaux pour maintenir les deux éléments solidaires. Des moyens de chauffage augmentent la température d'un des éléments, de sorte que le taraudage du perçage de l'élément en question se dilate. La vis n'est alors plus maintenue sur l'élément chauffé, autorisant la séparation des deux éléments.

Le problème majeur est que la vis, une fois libérée de l'élément chauffé, peut se bloquer dans le perçage de cet élément. Des moyens supplémentaires doivent donc être prévus pour permettre à la vis de sortir avec certitude du perçage de l'élément chauffé. En outre, la vis est une pièce supplémentaire qui, une fois que la séparation des deux éléments se fait, devient sans fonction, augmentant la masse et les coûts inutilement.

Enfin, le document FR 2 947 808 propose un dispositif de séparation basé sur le chauffage brutal d'un des deux éléments reliés. Les deux éléments sont reliés par des pions ou par collage. Un premier élément est chauffé par une source de chauffage chimique, en l'occurrence une Thermite, mais pas le deuxième élément, lequel est isolé thermiquement de la source. Sous l'effet de la montée brutale de la température d'une face du premier élément, de l'ordre de 300°C en 1,4 s, celui-ci se déforme de manière à s'éloigner du deuxième élément, provoquant la séparation.

Un problème de cette solution est qu'une fois le processus d'élévation de la température est amorcé, il n'est plus possible de l'arrêter en cas de besoin, interdisant des arrêts d'urgence, par exemple lorsque le processus a été amorcé involontairement. En outre, cette solution requiert le contrôle de l'augmentation de la température sur une seule face de l'élément chauffant, sans quoi la déformation n'est pas adéquate pour obtenir la séparation. C'est pourquoi l'augmentation de température doit être brutale - de l'ordre de quelques secondes seulement - pour qu'il n'y ait pas de transfert thermique vers l'autre face de l'élément chauffé. Le choix du matériau de l'élément chauffé est donc restreint puisqu'il doit également limiter la conduction thermique en son sein. En outre, une telle élévation brutale risque d'endommager des équipements situés autour du dispositif de séparation, sauf à placer des moyens d'isolation encombrant et coûteux.

Le document WO 2015/014942 divulgue un dispositif de séparation comprenant un agent de liaison, un dispositif de chauffage et un système de commande.

Ainsi, il existe un besoin pour un nouveau dispositif de séparation de deux pièces particulièrement adapté au domaine spatial, surmontant notamment les inconvénients précités.

L'invention propose donc un dispositif de séparation dans lequel la séparation est contrôlée et prédictible, fiable, n'augmentant pas les coûts, n'endommageant pas les équipements environnants, ne produisant pas de débris, et de taille compacte n'augmentant pas l'encombrement.

Selon un premier aspect, l'invention propose un dispositif de séparation contrôlée d'une première pièce dite fixe et d'une deuxième pièce dite mobile. La pièce fixe présente une surface de liaison fixe en vis-à-vis d'une surface de liaison mobile de la pièce mobile. En outre, la pièce fixe présente un coefficient de dilatation thermique différent de celui de la pièce mobile. Le dispositif de séparation comprend alors :
- au moins un agent de liaison disposé en couche entre la surface de liaison fixe et la surface de liaison mobile,
- au moins un dispositif de chauffage d'au moins une de la pièce fixe et de la pièce mobile,
- au moins un système de commande du dispositif de chauffage.

La séparation est ainsi basée sur la différence de déformation entre la pièce fixe et la pièce mobile lors de la mise en oeuvre du dispositif de chauffage. Le dispositif de séparation permet alors d'obtenir la séparation de la pièce fixe et de la pièce mobile de manière contrôlée, indépendamment de l'environnement, et sans la mise en place d'un cycle de déformation.

Le dispositif de chauffage peut être monté sur la pièce fixe, sans contact avec la pièce mobile, de sorte que la pièce mobile n'est pas chauffée directement. La différence de température combinée à la différence de coefficient thermique augmente la différence de déformation entre la pièce fixe et la pièce mobile, favorisant davantage la séparation.

De préférence, l'agent de liaison a une température de transition vitreuse inférieure à la température de chauffage du dispositif de chauffage, de sorte que la couche de l'agent de liaison se ramollit, affaiblissant sa tenue mécanique. L'agent de liaison peut par ailleurs présenter une température de dégradation supérieure à la température de chauffage du dispositif de chauffage, de manière à ne pas être totalement détruit par le chauffage.

Par exemple, le dispositif de chauffage comprend des éléments de chauffage électriques, bon marché, facile à mettre en place et à contrôler. Les éléments de chauffage de type électrique sont par exemple des fils qui peuvent facilement s'enrouler autour de la pièce fixe et/ou de la pièce mobile.

L'agent de liaison est par exemple une colle de type Hysol® EA9321.

Selon un exemple de réalisation, le coefficient de dilatation thermique de la pièce fixe est supérieur au coefficient de dilatation thermique de la pièce mobile. Ainsi, en plaçant le dispositif de chauffage sur la pièce fixe, celle-ci se déforme davantage que la pièce mobile, pour favoriser la séparation.

La pièce fixe peut réalisée en aluminium ou un de ses alliages, et la pièce mobile peut être réalisée au choix dans l'un des matériaux suivants : Invar, titane, carbure de silicium, polymère à renfort fibre de carbone (CFRP). Lorsque la pièce fixe est réalisée en aluminium et la pièce mobile est réalisée en Invar, la différence entre le coefficient thermique de la pièce fixe et le coefficient de dilatation thermique de la pièce (8) mobile est de l'ordre de 20.10⁻⁶°C⁻¹.

Par exemple, la séparation de la pièce fixe et de la pièce mobile s'effectue en une durée entre 2 et 10 minutes. Par exemple encore, la température maximale du dispositif de chauffage est de 200°C.

Selon un mode de réalisation, le système de commande comprend un système de communication sans fil pour recevoir un signal de commande, permettant d'enclencher le dispositif de chauffage à distance, par exemple depuis la Terre.

La pièce et la pièce mobile peuvent présenter une forme cylindrique, de sorte que la montée de température sous l'effet du dispositif de chauffage s'effectue de manière sensiblement homogène dans les pièces par rayonnement.

La pièce fixe et la pièce mobile peuvent être en contact direct ou non.

Selon un deuxième aspect, l'invention propose une application d'un dispositif de séparation tel que présenté ci-dessus aux lanceurs spatiaux, aux sondes spatiales, aux satellites, aux missiles.

D'autres avantages de l'invention apparaîtront à la lumière de la description qui suit d'un mode de réalisation particulier accompagné des figures dans lesquelles :
La figure 1 est une représentation schématique en perspective d'un satellite comprenant un corps principal sur lequel un ensemble d'équipements sont montés, les équipements étant dans une position repliée.
La figure 2 est une représentation du satellite de la figure 1 dans lequel les équipements sont dans une position déployée.
La figure 3 est une représentation tridimensionnelle d'une première pièce d'un dispositif de séparation selon un premier mode de réalisation.
La figure 4 est une représentation tridimensionnelle d'une deuxième pièce du dispositif de séparation du premier mode de réalisation.
La figure 5 est une vue en coupe du dispositif de séparation comprenant la première pièce de la figure 3 et la deuxième pièce de la figure 4.
La figure 6 est une vue en perspective du dispositif de la figure 5.
La figure 7 est une représentation schématique d'un dispositif de chauffage du dispositif de séparation.
La figure 8 est une illustration du dispositif de chauffage de la figure 7 monté sur la première pièce de la figure 3.
La figure 9 est une vue similaire à la figure 5, pour un deuxième mode de réalisation du dispositif de séparation.

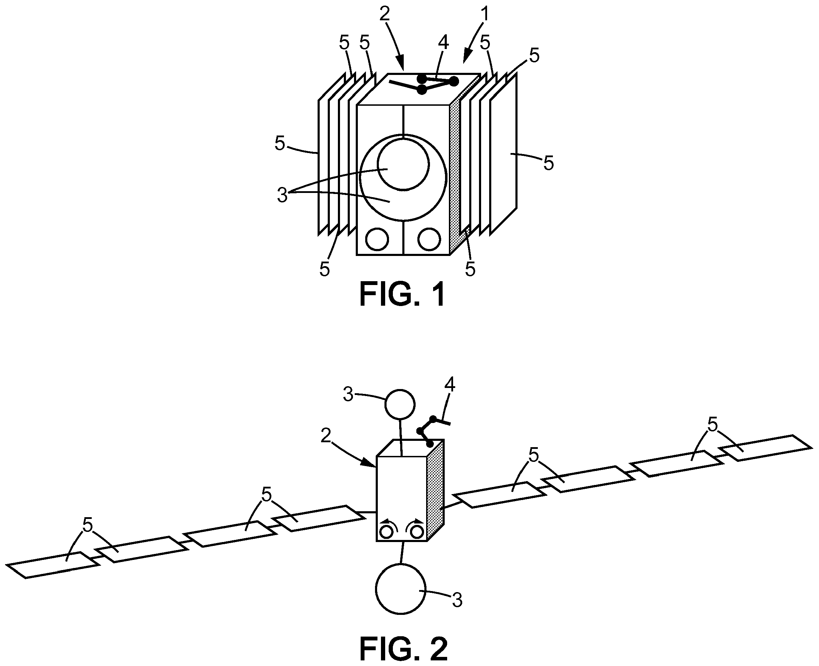

Sur les figures 1 et 2, il est représenté un véhicule spatial, en l'occurrence un satellite **1**, comprenant un corps **2** principal sur lequel un ensemble d'équipements est monté, dont au moins un équipement est mobile par rapport au corps 2 principal.

Les équipements mobiles comprennent par exemple des antennes **3**, un bras **4** et des panneaux solaires **5**, chacun de ses équipements étant déployables, c'est-à-dire qu'ils sont mobiles par rapport au corps 2 principal entre une position repliée (figure 1) dans laquelle ils sont ramenés contre le corps 2 du satellite de manière à fournir une forme compacte, adaptée au lancement du satellite 1, et une position déployée (figure 2) dans laquelle ils sont écartés du corps 2 pour leur utilisation une fois que le satellite est largué dans l'espace.

On peut noter pour la suite de la description que les panneaux 5 solaires sont montés en série, deux séries étant formées sur le corps 2 du satellite 1, sur deux faces opposées, une articulation étant formée entre deux panneaux 5 successifs adjacents. Lorsque les panneaux 5 solaires sont en position repliée, chaque panneau 5 d'une série est ramené contre un autre panneau 5 de la même série, à la manière d'un pliage en accordéon.

Pour chacun des équipements déployables, le satellite 1 nécessite donc la mise en oeuvre d'un ou plusieurs dispositifs **6** de séparation contrôlée permettant d'une part de maintenir les équipements déployables dans une position repliée et les mécanismes et d'autre part de permettre leur passage dans la position déployée.

Les équipements mobiles peuvent également comprendre un équipement animé, destiné à prendre un état inactif, dans lequel l'équipement est immobile par rapport au corps 2 principal, par exemple pendant le lancement du satellite et un état en fonctionnement, dans lequel l'équipement est en mouvement par rapport au corps 2 principal, par exemple lorsque le satellite est en orbite. Là encore, un ou plusieurs dispositifs 6 de séparation entre un tel mécanisme et le corps 2 principal, permettant de maintenir le mécanisme animé dans l'état inactif et de le libérer pour le mettre dans l'état de fonctionnement sont nécessaires.

Le dispositif 6 de séparation comprend une première pièce **7**, appelée pièce fixe, et une deuxième pièce **8**, appelée pièce mobile, chacune fixée rigidement à une structure du satellite 1, au niveau d'une articulation. La pièce 7 fixe peut par exemple être fixée rigidement au corps 2 du satellite, auquel cas la pièce 8 mobile est fixée rigidement à un équipement déployable. En variante, la pièce 7 fixe peut être fixée rigidement à un panneau solaire 5 et la pièce 8 mobile est alors fixée rigidement au panneau 5 solaire adjacent de la même série. Tout type de moyens peut être utilisé pour le montage de la pièce 7 fixe et de la pièce 8 mobile sur le corps 2 ou sur un des équipements déployables.

La pièce 7 fixe et la pièce 8 mobile sont assemblées par l'intermédiaire d'un agent de liaison à haute résistance compatible avec les exigences spatiales. En particulier, l'agent de liaison a ses propriétés physiques qui ne sont pas ou peu impactées par l'environnement du satellite 1, aussi bien pendant le lancement qu'une fois dans l'espace.

Plus précisément, la pièce 7 fixe présente une surface **9** de liaison fixe, destinée à coopérer avec une surface **10** de liaison mobile de la pièce 8 mobile. La surface 9 de liaison fixe est en vis-à-vis de la surface 10 de liaison mobile, une couche **11** de l'agent de liaison étant disposée entre les deux surfaces 9, 10 de liaison. La surface 9 de liaison fixe est compatible avec la surface 10 de liaison mobile, c'est-à-dire que leur forme et leurs dimensions permettent de mettre les deux surfaces 9, 10 en contact l'une avec l'autre par l'intermédiaire de la couche 11 de l'agent de liaison.

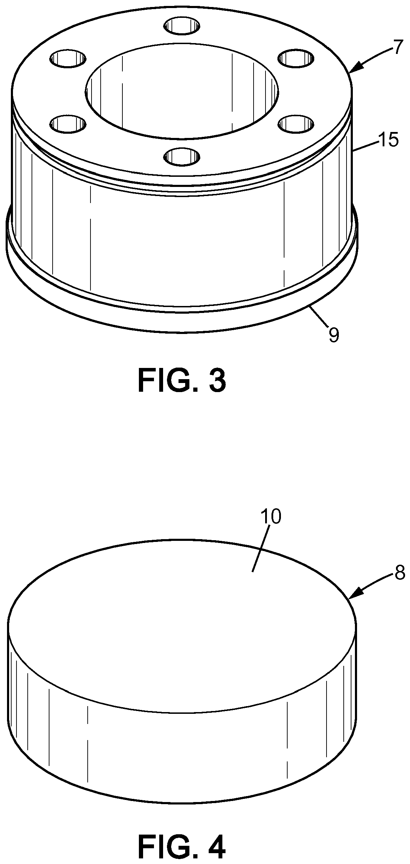

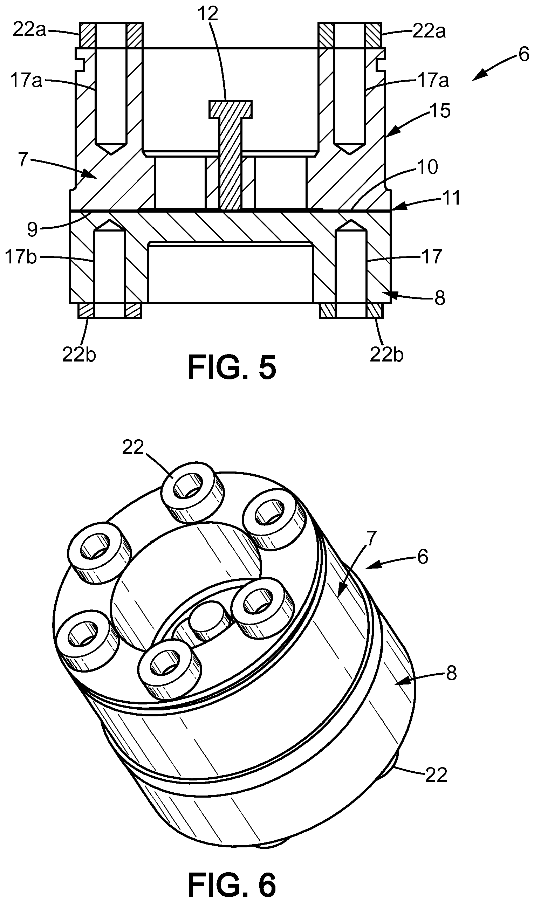

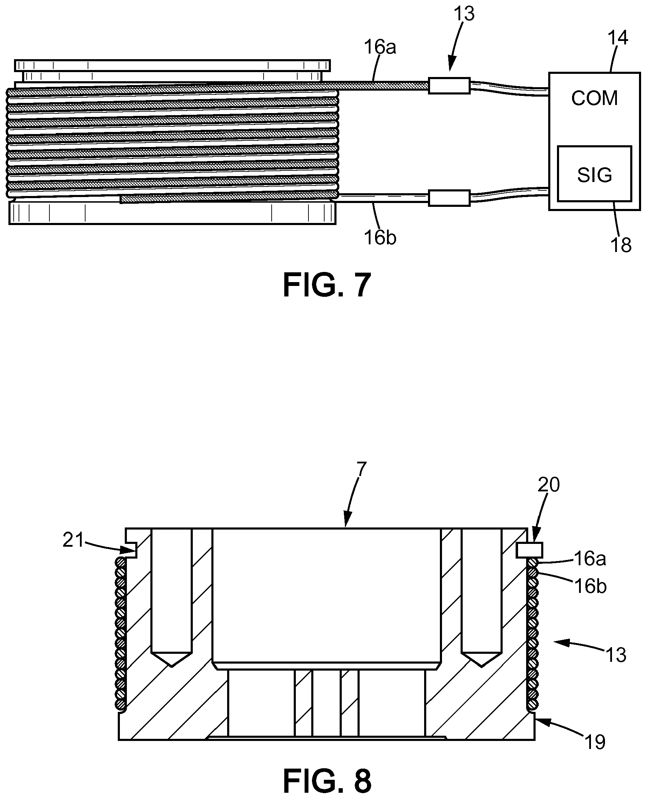

Ainsi, selon un exemple, les deux surfaces 9, 10 de liaison sont planes, comme illustrées sur les figures 3 à 8. Selon cet exemple, les deux pièces 7, 8 ne sont pas en contact direct l'une avec l'autre, c'est-à-dire qu'il n'y a pas de surface de contact direct entre la pièce 7 fixe et la pièce 8 mobile, sans interposition de la couche 11 d'agent de liaison. Cette configuration permet notamment d'avoir une tenue mécanique des deux pièces 7, 8 ensemble optimisée.

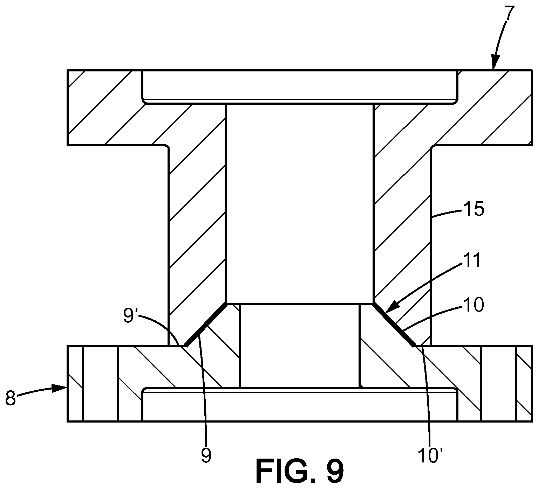

Selon un autre exemple de réalisation illustré sur la figure 9, la pièce 7 fixe est une pièce dite mâle, et la pièce 8 mobile est une pièce dite femelle. Les surfaces 9, 10 de liaison sont de forme tronconique complémentaire, la couche 11 d'agent de liaison étant interposée entre elles. L'angle au sommet de la forme tronconique est par exemple de 45° environ. Dans cette configuration, les deux pièces 7, 8 de liaison peuvent être en contact direct par ailleurs. Par exemple, la pièce 7 fixe comprend une surface 9' de contact et la pièce 8 mobile comprend une surface 10' de contact. Les deux surfaces 9', 10' de contact sont de forme compatible à un contact direct l'une avec l'autre, sans interposition de la couche 11 d'agent de liaison. Par exemple, les deux surfaces 9', 10' de contact sont sensiblement planes. Comme cela sera explicité plus loin, cette configuration permet de participer à la séparation des deux pièces 7, 8.

De manière préférentielle, une préparation de surface spécifique des surfaces 9, 10 de liaison de chacune des pièces 7, 8 est appliquée afin d'adapter, c'est-à-dire d'augmenter ou de réduire la capacité d'adhésion de l'agent de liaison et permettre d'utiliser plusieurs types d'agent de liaison. Par exemple, chacune des surfaces 9, 10 de liaison peut subir une abrasion, afin de faire varier selon les besoins les propriétés d'ancrage mécanique avec l'agent de liaison.

La pièce 7 fixe présent un coefficient de dilatation thermique différent de celui de la pièce 8 mobile. Par exemple, la pièce 7 fixe est réalisée dans un matériau avec un coefficient de dilatation thermique très important, de type aluminium, tandis que la pièce 8 mobile est réalisée dans un matériau à coefficient de dilatation thermique très faible, tel que l'INVAR, le titane (Ti), le carbure de silicium (SiC) ou le polymère à renfort fibre de carbone (connu aussi sous son acronyme anglais de CFRP pour Carbon Fiber Reinforced Polymer). Il peut toutefois être prévu que la pièce 8 mobile ait un coefficient de dilatation thermique supérieur à celui de la pièce 7 fixe. Un objectif est de maximiser la différence de coefficient de dilatation à l'aide de matériaux qui ont un très fort coefficient de dilatation pour pouvoir avoir à fournir le moins d'énergie possible pour permettre la séparation. De préférence donc, la différence de coefficient de dilatation thermique entre le matériau de la pièce 7 fixe et le matériau de la pièce 8 mobile est adaptée pour créer une contrainte thermoélastique dans l'assemblage collé au moins égale à la contrainte de rupture de cet assemblage.

De manière optionnelle, le dispositif 6 de séparation comprend, de plus, un ou plusieurs éléments **12** de pré-charge à mémoire de forme ou des ressorts fixés rigidement à la pièce 7 fixe et qui, comme cela sera vu plus loin, aident à la séparation des deux pièces 7, 8.

Le dispositif 6 de séparation comprend en outre un dispositif **13** de chauffage d'au moins une de la pièce 7 fixe et de la pièce 8 mobile et un système **14** de commande (COM) du dispositif 13 de chauffage. De préférence, le dispositif 13 de chauffage comprend des éléments de chauffage électrique, par exemple de type résistance, et le système 14 de commande est de nature électronique, des moyens de connexion filaires étant placés entre eux. Pour faciliter leur connexion, selon l'exemple présenté ici, le dispositif 13 de chauffage est monté sur la pièce 7 fixe et le système 14 de commande est monté sur le corps 2 du satellite.

Selon le mode de réalisation présenté ici, la surface extérieure de la pièce 7 fixe présente au moins une portion **15** cylindrique et le dispositif 13 de chauffage comprend au moins une bobine **16** de fils chauffants enroulés en spirale autour de la portion 15 cylindrique de la pièce 7 fixe. Pour assurer la redondance du chauffage, on peut utiliser deux bobines **16a**, **16b** spirales indépendantes de fils chauffants enroulés de façon alternée autour de la portion 15 cylindrique de la pièce 7 fixe.

La forme en spirale est due au fait notamment qu'il faut une certaine longueur de fils pour obtenir les températures souhaitées avec la puissance disponible. La spirale permet donc d'aménager la longueur nécessaire dans un espace réduit.

Pour s'assurer que les spirales restent en place pendant les charges mécaniques du lancement, les deux bobines 16a, 16b sont logées dans un espace bridé d'un côté par un épaulement 19 et de l'autre côté par une bague de rétention 20 implantée dans une gorge 21, épaulement 19 et gorge 21 étant formés sur la portion 15 cylindrique de la surface extérieure de la pièce 7 fixe. Le contact thermique entre les spirales 16 et le cylindre 15 peut être assuré par un liant qui optimise la conduction.

Alternativement, la ou les bobines 16a, 16b utilisées peuvent être disposées à l'intérieur de la pièce 7 fixe, dans une gorge ouverte sur la partie attachée au satellite et creusée dans la partie cylindrique 15 de la pièce 7 fixe. Ainsi, le réchauffage est encore plus efficace puisqu'il se produit au coeur même de la pièce 7 fixe à réchauffer.

De préférence, la pièce 7 fixe et la pièce 8 mobile sont symétriques de révolution, au moins au niveau de leur surface 9, 10 de liaison, de sorte que la diffusion thermique à partir du dispositif 13 de chauffage enroulé sur la portion 15 cylindrique de la pièce 7 fixe rayonne de manière uniforme dans les pièces, et notamment sur les surfaces 9, 10 de liaison, alors circulaires ou annulaires, limitant le risque de présence de point froid.

Le dispositif 6 de séparation est d'abord préassemblé en mettant en coopération la surface 9 de liaison fixe de la pièce 7 fixe avec la surface 10 de liaison mobile de la pièce 8 mobile par l'intermédiaire de la couche 11 de l'agent de liaison. Par exemple, la couche 11 d'agent de liaison peut être appliquée sur l'une de la surface 9 de liaison fixe et de la surface 10 de liaison mobile, et l'autre de la surface 9 de liaison fixe et de la surface 10 de liaison mobile est appuyée sur la couche 11 de l'agent de liaison. Les deux pièces 7, 8 sont pressées l'une contre l'autre pour obtenir l'adhésion de l'agent de liaison sur les deux surfaces 9, 10 de liaison. En variante, une première couche de l'agent de liaison peut être appliquée sur la surface 9 de liaison fixe et une deuxième couche peut être appliquée sur la surface 10 de liaison mobile, puis les deux surfaces 9, 10 sont rapprochées, la première couche étant mise en contact avec la deuxième couche de l'agent de liaison, pour former la couche 11 d'agent de liaison entre les deux pièces 7, 8. De préférence, la couche 11 de l'agent de liaison est en contact sur la surface 9 de liaison fixe sur une dimension égale à celle avec laquelle il est en contact avec la surface 10 de liaison mobile.

Le dispositif 6 de séparation préassemblé est alors installé sur le satellite 1. Par exemple, la pièce 7 fixe est fixée rigidement au corps 2 du satellite par vissage dans des trous taraudés **17a** et la pièce 8 mobile est fixée rigidement à un équipement déployable du satellite également par vissage dans des trous taraudés **17b.** Des rondelles isolantes, respectivement **22a et 22b,** peuvent être interposées, respectivement d'une part entre le corps 2 du satellite et la pièce 7 fixe et d'autre part entre l'équipement déployable et la pièce 8 mobile, pour protéger le satellite 1 et l'équipement déployable des températures élevées.

Le dispositif 6 de séparation est alors bloqué et ancré sur le satellite 1, entre le corps 2 et un équipement, et permet de supporter les efforts attendus notamment lors du transport et de la phase de lancement, pendant lesquels il doit maintenir l'équipement en position repliée.

Le dispositif 6 de séparation est débloqué au moment opportun de manière à mettre l'équipement dans la position déployée.

A cet effet, un signal de commande est envoyé au système 14 de commande. Par exemple, le dispositif 14 de commande comprend un système **18** de communication (SIG) sans fil, permettant de recevoir le signal de commande émis par exemple depuis la Terre. En variante, le système 14 de commande peut être préprogrammé pour déclencher la mise en oeuvre du dispositif 13 de chauffage à un moment donné.

Sur réception du signal de commande, le système 14 de commande enclenche la mise en marche du dispositif 13 de chauffage. La température de la pièce 7 fixe augmente et la pièce 7 fixe se déforme en augmentant son volume sous l'effet de la chaleur. La température de la pièce 8 mobile peut également augmenter par le transfert de chaleur s'opérant de la pièce 7 fixe chauffée par l'intermédiaire de la couche 11 d'agent de liaison. Le dispositif 6 de séparation n'utilise pas de cycle thermique mais seulement une unique augmentation de la température provoquée par le dispositif 13 de chauffage.

Les déformations de la pièce 7 fixe ne suivant pas les déformations de la pièce 8 mobile, la couche 11 d'agent de liaison est alors soumise à des contraintes, et notamment des contraintes de cisaillement, c'est-à-dire transversales à l'épaisseur de la couche 11 d'agent de liaison entre les deux surfaces 9, 10 de liaison, ce qui provoque la séparation de la pièce 7 fixe et de la pièce 8 mobile.

La séparation peut être adhésive, c'est-à-dire que la couche 11 de l'agent de liaison reste adhérée à une seule de la surface 9 de liaison fixe et de la surface 10 de liaison mobile, ou être cohésive, c'est-à-dire que la couche 11 de l'agent de liaison se scinde en au moins deux parties, une partie restant adhérée sur la surface 9 de liaison fixe et l'autre partie restant adhérée sur la surface 10 de liaison mobile.

Les éventuels éléments 12 de pré-charge participent à la séparation en créant une contrainte axiale, c'est-à-dire dans la direction de l'épaisseur de la couche 11 d'agent de liaison, tendant à séparer la pièce 7 fixe et la pièce 8 mobile. Les éléments 12 de pré-charge sont par exemple des ressorts, comprimés entre la pièce 7 fixe et la surface 10 de liaison mobile de la pièce 8 mobile, lorsque le dispositif 6 de séparation est bloqué, et qui se détendent lorsque la couche 11 d'agent de liaison a été suffisamment affaiblie par les contraintes provoquées par les différences de déformations des deux pièces 7, 8 et/ou par la chaleur. En variante, les éléments 12 de pré-charge peuvent être des pions qui se dilatent sous l'effet de la chaleur du dispositif 13 de chauffage de manière à exercer un effort axial entre la pièce 7 fixe et la pièce 8 mobile. Plus précisément, les pions ont un coefficient de dilatation plus élevé que celui de la pièce 7 fixe, de sorte qu'ils se déforment davantage que la pièce 7 fixe sous l'effet de la chaleur pour exercer l'effort axial.

Lorsque la pièce 7 fixe et la pièce 8 mobile sont en contact direct, par l'intermédiaire de surfaces 9', 10' de contact comme vu précédemment avec l'exemple des surfaces 9, 10 de liaison tronconique, les différences de déformations induisent également qu'une contrainte axiale est exercée entre les deux pièces 7, 8 par leur surfaces 9', 10' de contact, aidant à les écarter l'une de l'autre.

Une fois que la séparation entre la pièce 7 fixe et la pièce 8 mobile est obtenue, le système 14 de commande arrête l'alimentation du dispositif 13 de chauffage. A cet effet, un signal d'arrêt peut être reçu par le système 16 de communication, ou l'arrêt peut être programmé après une période de temps déterminée.

Le mécanisme de séparation mis en oeuvre par le dispositif 6 de séparation fait intervenir principalement la différence de coefficient de dilatation thermique. En effet, par exemple lorsque le dispositif 13 de chauffage est monté sur la pièce 7 fixe, sous l'effet de la chaleur générée par le dispositif 13 de chauffage, la pièce 7 fixe, au moins au niveau de sa surface 9 de liaison fixe, se déforme, et les déformations de la pièce 8 mobile ne suivent pas celles de la pièce 7 fixe. En outre, la chaleur étant transférée de la pièce 7 fixe vers la pièce 8 mobile, la température au sein des deux pièces 7, 8 n'est pas identique, accentuant davantage encore les différences de déformation.

La couche 11 d'agent de liaison se retrouve alors affaiblie, c'est-à-dire que la tenue mécanique de la couche 11 d'agent de liaison entre les deux surfaces 9, 10 de liaison s'est dégradée.

Le mécanisme de séparation peut également faire intervenir d'autres paramètres, et notamment l'état des surfaces 9, 10 de liaison, favorisant ou non l'adhésion de la couche 11 de l'agent de liaison, l'épaisseur de la couche 11 de l'agent de liaison et la nature de l'agent de liaison.

Il s'agit donc de prendre en compte un ensemble de paramètres pour déterminer la contrainte de rupture de l'ensemble formé par la pièce 7 fixe, la couche 11 de l'agent de liaison et la pièce 8 mobile, et la température à appliquer à la pièce 7 fixe par le dispositif 13 de chauffage pour obtenir la séparation.

Ainsi, à titre d'exemple uniquement, on peut citer les exemples suivants de couples de matériaux qui ont donné satisfaction dans le dispositif 6 de séparation :
- le couple de matériau Invar-Aluminium avec une différence de coefficient de dilatation thermique de l'ordre de 20.10⁻⁶°C⁻¹ ;
- le couple de matériau Titane-Inox avec une différence de coefficient de dilatation thermique de l'ordre de 2.10⁻⁶°C⁻¹ ;
- le couple de matériau Aluminium-CFRP avec une différence de coefficient de dilatation thermique de l'ordre de 24.10⁻⁶°C⁻¹.

La température de chauffage par le dispositif 13 de chauffage est choisie pour être inférieure à la température de dégradation de l'agent de liaison, c'est-à-dire que la température de chauffage ne dépasse pas la température au-delà de laquelle l'agent de liaison perd complétement ses propriétés mécaniques et son intégrité physique.

Par exemple, la température peut être choisie inférieure à la température de fusion de l'agent de liaison. Ainsi, la couche 11 d'agent de liaison ne fond pas, évitant l'émission de débris qui pourraient endommager les équipements du satellite 1. Avantageusement cependant, la température de chauffage est supérieure à la température de transition vitreuse de l'agent de liaison, de sorte que la couche 11 d'agent de liaison se ramollit sous l'effet de la chaleur et l'affaiblisse. De préférence, la température de transition vitreuse est élevée, c'est-à-dire supérieure ou égale à 50°C.

En variante, l'agent de liaison peut être thermodurcissable, de sorte qu'il ne se ramollit pas sous l'effet de la chaleur, mais au contraire durcit, le rendant plus rigide et donc plus fragile vis-à-vis des différences de déformations des deux pièces 7, 8. Ainsi, alors que les deux pièces 7, 8 se déforment sous l'effet de la chaleur, la rigidité de la couche 11 de l'agent de liaison augmente, empêchant la couche 11 de liaison de suivre les déformations.

La séparation entre la pièce 7 fixe et la pièce 8 mobile ne génère alors pas ou peu de débris ou de pollution pour les équipements et le satellite 1.

L'agent de liaison est notamment une colle. Il s'agit par exemple d'une colle structurale bi-composant et/ou thermodurcissable à base d'époxy. Sa résistance au cisaillement dépend des besoins. Typiquement, elle peut être supérieure ou égale à 20 MPa (méga Pascals) à température ambiante. Son module d'Young est également déterminé en fonction des besoins, et il est par exemple supérieur ou égal à 1,8 GPa (giga Pascals) à température ambiante.

A titre d'exemple, lorsque la pièce 7 fixe est en aluminium, la pièce 8 mobile en INVAR, la température maximale de chauffage est de 200°C, l'agent de liaison est une colle Hysol® EA9321 et la puissance consommée par le dispositif 13 de chauffage est de 300W, alors le temps pour obtenir la séparation entre la pièce 7 fixe et la pièce 8 mobile est de l'ordre de 2 minutes. Le temps de séparation dépend également de la puissance électrique utilisée pour le réchauffage et de la température initiale des matériaux avant le démarrage du réchauffage. Ainsi, avec une puissance électrique plus faible (par exemple de 150W), le temps de séparation peut se situer typiquement entre 3 et 10 minutes.

Le temps pour obtenir le déblocage du dispositif 6 de séparation est cependant variable, car il dépend notamment de la taille de la pièce 7 fixe, de l'agent de liaison, du matériau utilisé pour les pièces 7 fixe et 8 mobile. Le temps de séparation peut donc être adapté en fonction des besoins.

Dans le cas d'équipements en série, c'est-à-dire avec plusieurs articulations, tels que les panneaux 5 solaires montés en série ou des réflecteurs d'antenne ou des bras déployables ou des instruments, chaque dispositif 6 de séparation placé sur chaque articulation doit être débloqué. C'est souvent le cas pour des structures larges ou de masse importante ou nécessitant une tenue aux vibrations très élevée. Selon une réalisation, le déblocage s'effectue de manière successive afin d'augmenter progressivement la charge appliquée aux dispositifs 6 restants. Cela permet de limiter la consommation électrique. Selon une variante, les dispositifs 6 de séparation sont tous débloqués simultanément, de manière à obtenir la position déployée pour l'ensemble des panneaux plus rapidement.

La séparation est complètement contrôlée par le dispositif 6 de séparation. Ainsi, en cas de problème, le chauffage par le dispositif 13 de chauffage peut être stoppé, interrompant le processus de séparation. Le dispositif 6 de séparation est également adapté quel que soit le type d'orbite, puisqu'il n'est pas ou peu influencé par l'environnement extérieur du satellite et qu'il n'en est pas dépendant pour son fonctionnement.

En outre, le dispositif 6 de séparation ne produit pas ou peu de débris pouvant endommager les équipements sensibles du satellite 1. La procédure de séparation se fait en douceur, sans choc ni vibration, afin de préserver les équipements de mesure de précision par exemple.

La séparation est réalisée rapidement, en quelques minutes, par exemple deux minutes, mais pas brutalement comme dans l'état de la technique, ce qui permet de pouvoir arrêter le procédé de séparation si besoin, mais également de limiter le transfert de chaleur vers la pièce 8 mobile, qui est reliée à un équipement susceptible d'être dégradé par une augmentation de température trop importante.

Le dispositif 6 de séparation est donc basé sur l'utilisation astucieuse de la différence de déformation entre la pièce 7 fixe et la pièce 8 mobile sous l'effet de la chaleur. L'environnement du satellite n'a pas d'influence sur la séparation. Le dispositif 6 de liaison n'utilise pas un cycle thermique, d'augmentation et de baisse de température, mais uniquement une augmentation de température.

Le dispositif 6 de séparation peut en outre être reconditionné. En effet, les déformations de la pièce 7 fixe et éventuellement de la pièce 8 mobile sont réversibles : une fois que le chauffage est arrêté et que la température baisse, les pièces 7, 8 reprennent leur forme initiale. Ainsi, pour réutiliser le dispositif 6 de séparation, il suffit d'appliquer une nouvelle couche 11 d'agent de liaison entres les surfaces 9, 10 de liaison. Le dispositif 6 de séparation est ainsi particulièrement adapté pour des essais au sol.

Le dispositif 6 de séparation peut également être utilisé à l'interface entre un satellite et un lanceur, entre les différents étages d'un missile ou d'un lanceur, ou sur une sonde spatiale porteuse d'équipements ou de systèmes à séparer (véhicule ou robot par exemple) dans le cadre de missions d'exploration.

Le dispositif 6 de séparation peut également être utilisé pour des constellations de satellites dans lesquelles la petite taille des plateformes nécessiterait des points uniques de séparation des appendices qui seraient, grâce à l'invention, plus faciles à mettre au point et à fiabiliser rapidement.

Le dispositif 6 de séparation peut également être utilisé sur des satellites LEO pour faciliter leur désagrégation en fin de vie, en activant la séparation des parties structurales du satellite (préalablement assemblées par collage selon l'invention) lors de la phase de rentrée dans l'atmosphère.

## Revendications

1. Dispositif (6) de séparation contrôlée d'une première pièce (7) dite fixe et d'une deuxième pièce (8) dite mobile, la pièce (7) fixe présentant une surface (9) de liaison fixe en vis-à-vis d'une surface (10) de liaison mobile de la pièce (8) mobile, le dispositif (6) de séparation comprenant :
- au moins un agent de liaison disposé en couche (11) entre la surface (9) de liaison fixe et la surface (10) de liaison mobile,
- au moins un dispositif (13) de chauffage d'au moins une de la pièce (7) fixe et de la pièce (8) mobile,
- au moins un système (14) de commande du dispositif (13) de chauffage,
**caractérisé en ce que** la pièce (7) fixe présente un coefficient de dilatation thermique différent de celui de la pièce (8) mobile.

2. Dispositif (6) de séparation selon la revendication 1, dans lequel le dispositif (13) de chauffage est monté sur la pièce (7) fixe, sans contact avec la pièce (8) mobile.

3. Dispositif (6) de séparation selon la revendication 1 ou la revendication 2, dans lequel l'agent de liaison a une température de transition vitreuse inférieure à la température de chauffage du dispositif (13) de chauffage.

4. Dispositif (6) de séparation selon l'une quelconque des revendications précédentes, dans lequel l'agent de liaison a une température de dégradation supérieure à la température de chauffage du dispositif (13) de chauffage.

5. Dispositif (6) de séparation selon l'une quelconque des revendications précédentes, dans lequel le dispositif (13) de chauffage comprend des éléments (16a, 16b) de chauffage électriques.

6. Dispositif (6) de séparation selon l'une quelconque des revendications précédentes dans lequel l'agent de liaison est une colle de type Hysol® EA9321.

7. Dispositif (6) de séparation selon l'une quelconque des revendications précédentes, dans lequel le coefficient de dilatation thermique de la pièce (7) fixe est supérieur au coefficient de dilatation thermique de la pièce (8) mobile.

8. Dispositif (6) de séparation selon la revendication précédente, dans lequel la pièce (7) fixe est réalisée en aluminium ou un de ses alliages, et la pièce (8) mobile est réalisée au choix dans l'un des matériaux suivants : Invar, titane, carbure de silicium, polymère à renfort fibre de carbone (CFRP).

9. Dispositif (6) de séparation selon la revendication 8 dans lequel la pièce (7) fixe est réalisée en aluminium et la pièce (8) mobile est réalisée en Invar, la différence entre le coefficient thermique de la pièce (7) fixe et le coefficient de dilatation thermique de la pièce (8) mobile est de l'ordre de 20.10⁻⁶°C⁻¹.

10. Dispositif (6) de séparation selon l'une quelconque des revendications précédentes, dans lequel la séparation de la pièce (7) fixe et de la pièce (8) mobile s'effectue en une durée entre 2 et 10 minutes.

11. Dispositif (6) de séparation selon l'une quelconque des revendications précédentes, dans lequel la température maximale du dispositif (13) de chauffage est de 200°C.

12. Dispositif (6) de séparation selon l'une quelconque des revendications précédentes, dans lequel le système (14) de commande comprend un système (16) de communication sans fil pour recevoir un signal de commande.

13. Dispositif (6) de séparation selon l'une quelconque des revendications précédentes, dans lequel la pièce (7) et la pièce (8) mobile ont une forme cylindrique.

14. Dispositif (6) de séparation selon l'une quelconque des revendications précédentes, dans lequel la pièce (7) fixe et la pièce (8) mobile ne sont pas en contact direct.

15. Application d'un dispositif (6) de séparation selon l'une quelconque des revendications précédentes aux lanceurs spatiaux, aux sondes spatiales, aux satellites, aux missiles.

## Patentansprüche

1. Trennvorrichtung (6) zur kontrollierten Trennung eines ersten sogenannten immobilen Teils (7) und eines zweiten sogenannten mobilen Teils (8) voneinander, wobei das immobile Teil (7) eine immobile Verbindungsfläche (9) gegenüber einer mobilen Verbindungsfläche (10) des mobilen Teils (8) aufweist,
wobei die Trennvorrichtung (6) aufweist:
- mindestens ein Verbindungsmittel, das als Schicht (11) zwischen der immobilen Verbindungsfläche (9) und der mobilen Verbindungsfläche (10) angeordnet ist,
- mindestens eine Heizvorrichtung (13) zum Heizen des immobilen Teils (7) und/oder des mobilen Teils (8),
- mindestens ein Steuersystem (14) zur Steuerung der Heizvorrichtung (13),
**dadurch gekennzeichnet, dass** das immobile Teil (7) einen Wärmeausdehnungskoeffizienten hat, der sich von demjenigen des mobilen Teils (8) unterscheidet.

2. Trennvorrichtung (6) nach Anspruch 1, in welcher die Heizvorrichtung (13) an dem immobilen Teil (7) ohne Kontakt mit dem mobilen Teil (8) angebracht ist.

3. Trennvorrichtung (6) nach Anspruch 1 oder Anspruch 2, in welcher das Verbindungsmittel eine Glasübergangstemperatur hat, die niedriger als die Heiztemperatur der Heizvorrichtung (13) ist.

4. Trennvorrichtung (6) nach einem der vorstehenden Ansprüche, in welcher das Verbindungsmittel eine Abbau- bzw. Zersetzungstemperatur hat, die höher als die Heiztemperatur der Heizvorrichtung (13) ist.

5. Trennvorrichtung (6) nach einem der vorstehenden Ansprüche, in welcher die Heizvorrichtung (13) elektrische Heizelemente (16a, 16b) aufweist.

6. Trennvorrichtung (6) nach einem der vorstehenden Ansprüche, in welcher das Verbindungsmittel ein Klebstoff vom Typ Hysol®EA9321 ist.

7. Trennvorrichtung (6) nach einem der vorstehenden Ansprüche, in welcher der Wärmeausdehnungskoeffizient des immobilen Teils (7) größer als der Wärmeausdehnungskoeffizient des mobilen Teils (8) ist.

8. Trennvorrichtung (6) nach einem der vorstehenden Ansprüche, in welcher das immobile Teil (7) aus Aluminium oder einer seiner Legierungen hergestellt ist und das mobile Teil (8) wahlweise aus einem der folgenden Materialien hergestellt ist: Invar, Titan, Siliziumkarbid, mit Kohlefasern verstärktes Polymer (CFRP).

9. Trennvorrichtung (6) nach Anspruch 8, in welcher das immobile Teil (7) aus Aluminium hergestellt ist und das mobile Teil (8) aus Invar hergestellt ist, wobei die Differenz zwischen dem Wärmeausdehnungskoeffizienten des immobilen Teils (7) und dem Wärmeausdehnungskoeffizienten des mobilen Teils (8) in der Größenordnung von 20.10⁻⁶°C⁻¹ ist.

10. Trennvorrichtung (6) nach einem der vorstehenden Ansprüche, in welcher die Trennung des immobilen Teils (7) und des mobilen Teils (8) voneinander sich in einer Zeitdauer zwischen 2 und 10 Minuten vollzieht.

11. Trennvorrichtung (6) nach einem der vorstehenden Ansprüche, in welcher die maximale Temperatur der Heizvorrichtung (13) 200°C ist.

12. Trennvorrichtung (6) nach einem der vorstehenden Ansprüche, in welcher das Steuersystem (14) ein Funkkommunikationssystem (16) zum Empfang eines Steuersignals aufweist.

13. Trennvorrichtung (6) nach einem der vorstehenden Ansprüche, in welcher das Teil (7) und das mobile Teil (8) zylinderförmig sind.

14. Trennvorrichtung (6) nach einem der vorstehenden Ansprüche, in welcher das immobile Teil (7) und das mobile Teil (8) nicht in direktem Kontakt sind.

15. Verwendung einer Trennvorrichtung (6) nach einem der vorstehenden Ansprüche auf Weltraum-Startraketen, Raumsonden, Satelliten, Flugkörper.

## Claims

1. Device (6) for controlled separation of a first, so-called stationary part (7) and a second, so-called mobile part (8), the stationary part (7) having a stationary connecting surface (9) opposite a mobile connecting surface (10) of the mobile part (8), the separation device (6) comprising:
- at least one bonding agent placed in a layer (11) between the stationary connecting surface (9) and the mobile connecting surface (10),
- at least one device (13) for heating at least one of the stationary part (7) and the mobile part (8),
- at least one control system (14) of the heating device (13),
**characterized in that** the stationary part (7) having a thermal expansion coefficient different from that of the mobile part (8).

2. Separation device (6) according to claim 1, in which the heating device (13) is mounted on the stationary part (7), without contact with the mobile part (8).

3. Separation device (6) according to claim 1 or claim 2, in which the bonding agent has a glass transition temperature less than the heating temperature of the heating device (13).

4. Separation device (6) according to any one of the preceding claims, in which the bonding agent has a decomposition temperature greater than the heating temperature of the heating device (13).

5. Separation device (6) according to any one of the preceding claims, in which the heating device (13) comprises electric heating elements (16a, 16b).

6. Separation device (6) according to any one of the preceding claims, in which the bonding agent is an adhesive of the Hysol® EA9321 type.

7. Separation device (6) according to any one of the preceding claims, in which the thermal expansion coefficient of the stationary part (7) is greater than the thermal expansion coefficient of the mobile part (8).

8. Separation device (6) according to the preceding claim, in which the stationary part (7) is produced from aluminium or one of its alloys, and the mobile part (8) is produced by selecting one of the following materials: Invar, titanium, silicon carbide, carbon fibre-reinforced polymer (CFRP).

9. Separation device (6) according to claim 8, in which the stationary part (7) is produced from aluminium and the mobile part (8) is produced from Invar, the difference between the thermal expansion coefficient of the stationary part (7) and the thermal expansion coefficient of the mobile part (8) is of the order of 20.10⁻⁶°C⁻¹.

10. Separation device (6) according to any one of the preceding claims, in which the separation of the stationary part (7) and the mobile part (8) is carried out in a period between 2 and 10 minutes.

11. Separation device (6) according to any one of the preceding claims, in which the maximum temperature of the heating device (13) is 200°C.

12. Separation device (6) according to any one of the preceding claims, in which the control system (14) comprises a wireless communication system (16) for receiving a control signal.

13. Separation device (6) according to any one of the preceding claims, in which the part (7) and the mobile part (8) are cylindrical in shape.

14. Separation device (6) according to any one of the preceding claims, in which the stationary part (7) and the mobile part (8) are not in direct contact.

15. Use of a separation device (6) according to any one of the preceding claims for space launchers, space probes, satellites, missiles.
